# EUROPEAN PATENT APPLICATION

(11) **EP 4 123 872 A1**
(43) Date of publication of application: **25.01.2023**
(21) Application number: 22185790.7
(22) Date of filing: 19.07.2022
(51) Int. Cl.: H02J 13/00, H02J 3/00

(54) **CENTRALIZED AI-BASED TOPOLOGY PROCESS FOR DIFFERENTIAL PROTECTION OF A POWER SUBSTATION**

(30) Priority: 20.07.2021 US 202117381056
(71) Applicant: General Electric Technology GmbH, 5400 Baden (CH)
(72) Inventor: ZOU, Li, Stafford, ST16 1WS (GB); MONTANER, Patrick, 34000 Montpellier (FR); LIU, Bo, Stafford, ST16 1WT (GB)
(74) Representative: Brevalex

(57) **Abstract**

Systems, methods, and computer-readable media are disclosed. An example method may include receiving a single-line drawing (SLD) of a power substation, the SLD including one or more components, the one or more components including at least one of: a current transformer (CT), a circuit breaker (CB), an isolator, a feeder, and a busbar. The example method may also include analyzing, using an artificial intelligence (AI) system, connection paths associated with the one or more components in the SLD. The example method may also include receiving real-time data relating to a status of the CB and a status of the isolator. The example method may also include providing, based on analyzing the connection paths, and the real-time data relating to the status of the CB and the status of the isolator, an indication of topology information associated with the power substation, the topology information including at least one of: an indication that the CT is a checkzone CT, an indication that the CT is a deadzone CT, an indication of a zone associated with the CT or the CB, or an indication that a zone is unprotectable.

## Description

### TECHNICAL FIELD

The disclosure relates to power systems, and, more particularly to, systems and methods for differential protection of a power substation.

### BACKGROUND

Topology replicas of busbar protection intelligence electronic devices (IEDs) in a power substation may be used to calculate, in real-time, protection measurement boundaries and tripping boundaries to emulate dynamic changes in bus operating modes. This may be a challenging task considering that a substation topology scheme can have a large number of different operating modes, as defined by combinations of current transformers (CTs), circuit breakers (CBs), and isolator operations.

Some conventional busbar protection systems may provide such capabilities and may be configured through settings or by drawings using pre-defined templates. These systems, however, have drawbacks. One example drawback may include the requirement that a user configuring the settings or drawings have both product knowledge and general busbar protection knowledge to be able to translate a single-line diagram (SLD) of the substation into topology settings or drawing templates. Any mistake in the configuration process may have consequences, such as a loss of protection or mal-operation in the substation. A second example drawback may include that while these systems often support most common busbar topology schemes, certain special or complex schemes may not be natively supported. A third example drawback that is related to the second drawback is that the topology software may need to be modified to support previously unsupported topology schemes. This maintenance work may be time-consuming and risky, as modifications may not be compatible with already-supported topology schemes. Additionally, some conventional systems may require that a topology drawing is broken down into smaller components that are each assigned to different peripheral units (PUs), which may be a complicated process. This may also be risky and off-putting to users as any mis-assignment of PUs may lead to loss of protection or mal-operation.

### BRIEF DESCRIPTION OF THE DRAWINGS

The detailed description is set forth with reference to the accompanying drawings. The drawings are provided for purposes of illustration only and merely depict example embodiments of the disclosure. The drawings are provided to facilitate understanding of the disclosure and shall not be deemed to limit the breadth, scope, or applicability of the disclosure. In the drawings, the left-most digit(s) of a reference numeral may identify the drawing in which the reference numeral first appears. The use of the same reference numerals indicates similar, but not necessarily the same or identical components. However, different reference numerals may be used to identify similar components as well. Various embodiments may utilize elements or components other than those illustrated in the drawings, and some elements and/or components may not be present in various embodiments. The use of singular terminology to describe a component or element may, depending on the context, encompass a plural number of such components or elements and vice versa.
Fig. 1 depicts a schematic illustration of an example system, in accordance with one or more example embodiments of the disclosure.
Fig. 2 depicts an example of a topology drawing conversion to a connection matrix, in accordance with one or more example embodiments of the disclosure.
Fig. 3 depicts an example flowchart, in accordance with one or more example embodiments of the disclosure.
Fig. 4 depicts another example flowchart, in accordance with one or more example embodiments of the disclosure.
Fig. 5 depicts an example method, in accordance with one or more example embodiments of the disclosure.
Fig. 6 depicts a schematic illustration of an example computing system and device architecture, in accordance with one or more example embodiments of the disclosure.

### DETAILED DESCRIPTION

This disclosure may relate to, among other things, centralized AI-based topology process for differential protection of a power substation. Particularly, the systems and methods described herein may utilize a centralized architecture that may handle topology drawings in a fully automatic way that does not require an SLD to be separated into multiple "virtual zones" including different elements of the SLD. That is, the systems and methods described herein include a drawing-based topology replica solution for a fully digital busbar protection IED. Automatic searches may be performed within a provided SLD for any connection paths between substation components illustrated in the SLD, such as current transformers (CTs), circuit breakers (CBs), isolators, busbars, etc. These searches may be performed with the knowledge of the substation SLD and the real-time status of CBs and isolators (and/or other components) to work out the differential protection measurement boundaries and tripping boundaries and other useful topology information. The solution can be relatively easy to use because, in some cases, the only configuration required may include providing an SLD of the substation. There may also not be a requirement for any pre-defined topology settings or templates. The system is also self-adaptive to be able to work with any common or new busbar topologies.

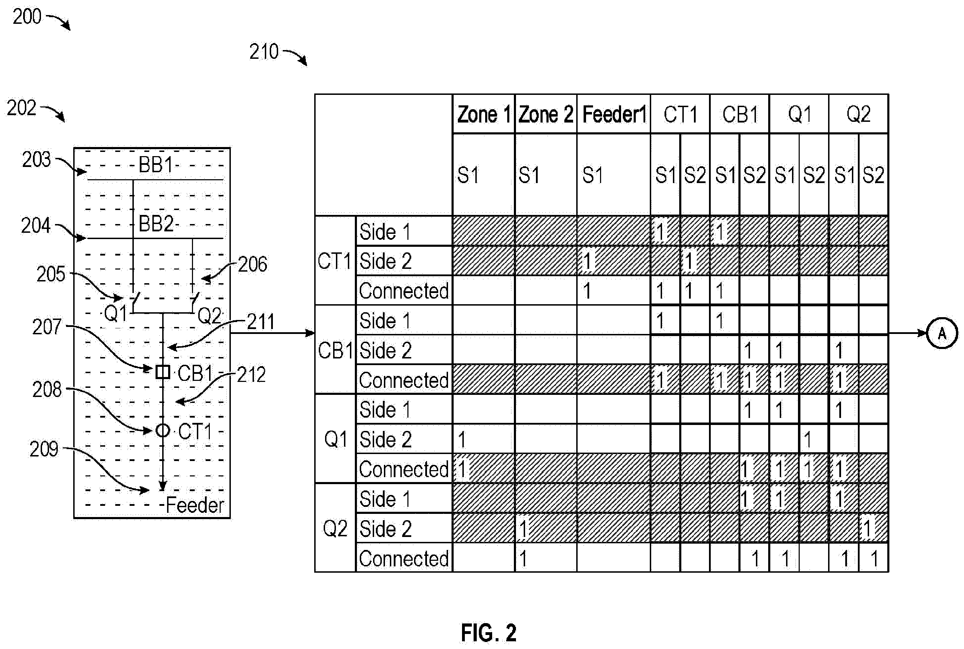

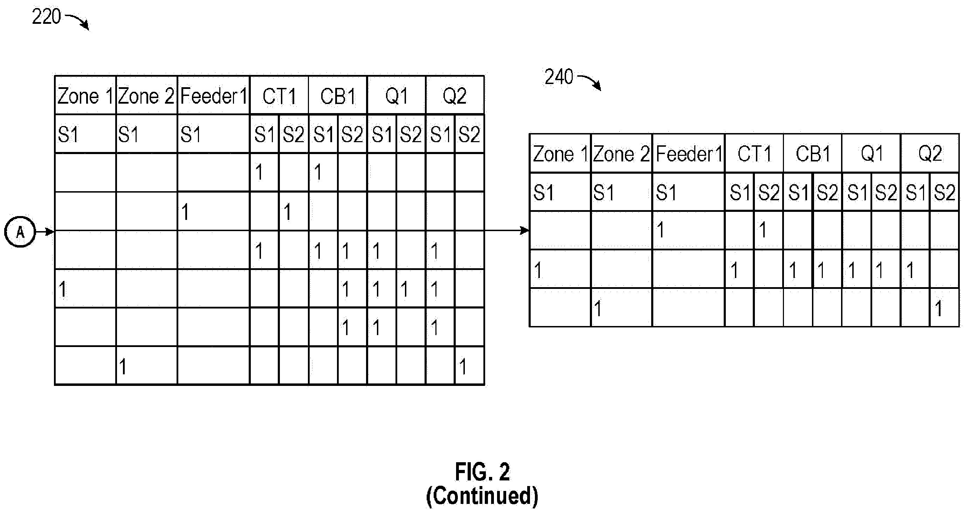

In some embodiments, the system topology that is analyzed may be configured by drawing the SLD using power system components including CTs, CBs, isolators, feeders, busbars, etc., without the need for dividing the drawing and assigning partial drawings to any peripheral units or any other manual intervention. The topology configuration data structure may also involve the creation and modification of connection matrices. A connection matrix may represent a topology drawing in a format that is able to be processed by a processor. An example of a connection matrix may be illustrated in Fig. 2 described in more detail below. A validation check may then be performed and a single connection information file may be generated, which may then be downloaded to a central processing unit to be processed. The central processing unit may dynamically calculate topology results in real-time for the whole SLD based on the real-time status of all the CBs and isolators (and/or any other components). The topology results may include zone CTs, check zone CTs, dead zone CTs, unprotectable zones, and terminal CBs to trip the whole substation. The information relating to differential zone CTs and zone CBs may be calculated without the need for separating the SLD into multiple "virtual zones." Being self-adaptive, the method automatically searches and exhausts the connection paths in the whole SLD between all the interested components to reveal various pieces of topology information, whatever the SLD may look like. Full offline topology simulations can be performed in the tool using simulated switches status to help users understand and validate the substations with different topologies.

In some embodiments, the systems and methods may also include performing a validation check of an SLD that is created and provided for analysis. The validation maybe used, among other purposes, to automatically detect unconnected components in the SLD. During this validation process, a warning may be generated if (1) any feeder, isolator, CT or CB component has one or two sides that are not connected to any component or (2) any busbar component is not connected to any other component. In some cases, an indication of these unconnected components may be provided to a user. For example, the components may be highlighted in the drawing or a text-based indication may be presented, to name a few non-limiting examples. The validation may also automatically detect any portions of the drawing that are not protected by any bus zones (as used herein, the term "zone" may refer to a busbar).

In some embodiments, as mentioned above, the systems and methods described herein may employ the use of artificial intelligence to eliminate the need to manually separate the SLD into different "virtual zones." The artificial intelligence may include any type of artificial intelligence, including, for example, machine learning, deep learning (for example, convolutional neural networks), and the like. Examples of convolutional neural networks may include regional CNN (R-CNN), fast regional CNN (fast R-CNN), faster regional CNN (Faster R-CNN), you only look once (YOLO), and/or single shot detection (SSD) to name a few non-limiting examples. The artificial intelligence may use image classification and/or component detection. The artificial intelligence may be implemented locally, or may be maintained at a remote location, such as a remote server (or multiple server(s)). The artificial intelligence may receive the SLD, and, using the one or more SLD, may identify potential issues with the substation topology included in the SLD.

In some cases, the artificial intelligence may be pre-trained before being implemented to perform real-time analyses. The pre-implementation training may be performed by providing input data to the artificial intelligence algorithm, while also indicating what the corresponding output(s) should be for the given input data. For example, the input data may be one or more predetermined SLDs. The artificial intelligence may be provided with corresponding outputs for the input data, such that the artificial intelligence may develop an understanding of SLDs that may include issues with certain component connections (or other types of issues with the topology). Additionally, the artificial intelligence may also be continuously trained even after being implemented as well. That is, the artificial intelligence may be pre-trained before being implemented to analyze actual SLDs, but may continue to be trained while analyzing actual SLDs. In this manner, the artificial intelligence may become more effective at identifying potential issues with topologies depicted in SLDs over time as more and more input data is provided to the artificial intelligence (for example, as more and more data is provided for the artificial intelligence to analyze).

In some cases, there may be a number of benefits to the approach described herein. First, the approach simplifies certain configuration steps. For example, the configuration of the topology for analysis may simply involve providing an SLD. Unlike the setting- or template-based solutions, specific protection knowledge or product specific knowledge may not be required to configure the topology. Additionally, the topology drawing may not need to be broken up into relatively small parts and assigned to multiple peripheral units (PUs). The enhanced usability, as a result of higher level of automation, reduces costs, and increases protection reliability and availability. The approach is also more flexible and may be capable of handling any kind of topology scheme (subject to basic validation checks) as a result of an ability to intelligently and dynamically search the whole SLD for connection paths between substation components such as CTs, CBs, isolators and busbars, etc. In contrast, while the conventional setting- and template-based solutions, which operate with a finite set of settings, rules, or templates, can often support most of the common topology schemes, certain special or complex schemes may not natively be supported. The approach is also self-adaptive and maintenance-free. In contrast, conventional setting- template-based solutions may need to have the topology software modified to support previously unsupported topology schemes by expanding the algorithms. This approach however, being self-adaptive, requires no such maintenance. The approach is also fully scalable. The approach is also usable as an offline simulator. The system has a full offline simulator to demonstrate the topology engine's operation using simulated switches status.

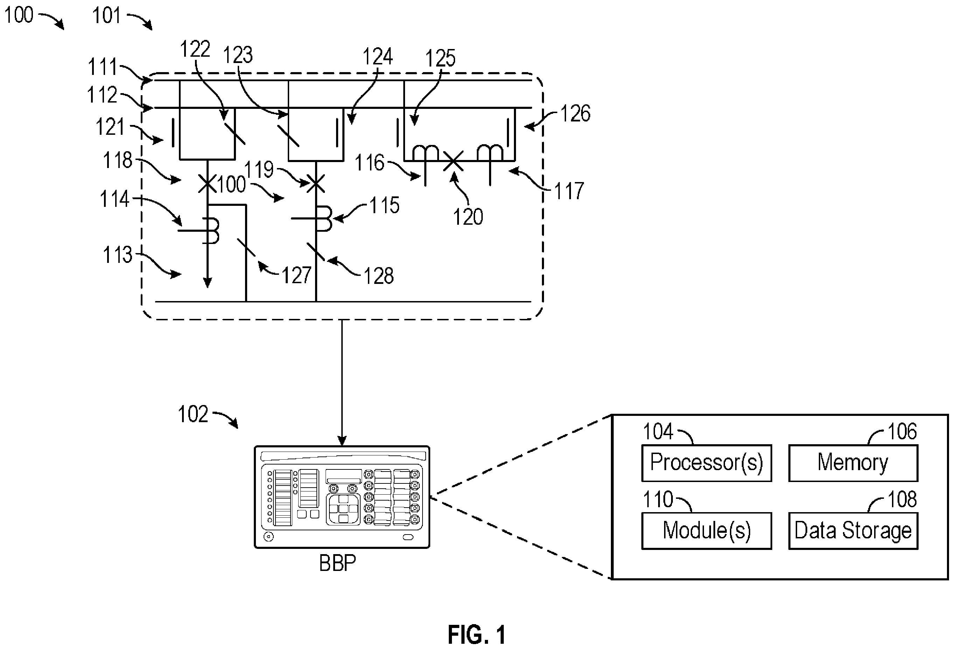

Fig. 1 depicts a schematic illustration of an example system 100, in accordance with one or more example embodiments of the disclosure. The system 100 may include a central processing unit 102 that may be used to analyze a topology drawing 101, such as an SLD (in some cases, the terms "topology drawing" and "SLD" may be used interchangeably herein). The central processing unit 102 may be capable of analyzing the entire topology drawing 101, instead of the topology drawing 101 being required to be separated into groups of components ("virtual zones") to be individually analyzed by different processing units ("PUs").

In some embodiments, the central processing unit 102 may include one or more processors 104 that may include any suitable processing unit capable of accepting digital data as input, processing the input data based on stored computer-executable instructions, and generating output data. The computer-executable instructions may be stored, for example, in the data storage 108 and may include, among other things, operating system software and application software. The computer-executable instructions may be retrieved from the data storage 108 and loaded into the memory 106 as needed for execution. The processor 104 may be configured to execute the computer-executable instructions to cause various operations to be performed. Each processor 104 may include any type of processing unit including, but not limited to, a central processing unit, a microprocessor, a microcontroller, a Reduced Instruction Set Computer (RISC) microprocessor, a Complex Instruction Set Computer (CISC) microprocessor, an Application Specific Integrated Circuit (ASIC), a System-on-a-Chip (SoC), a field-programmable gate array (FPGA), and so forth.

The data storage 108 may store program instructions that are loadable and executable by the processors 104, as well as data manipulated and generated by one or more of the processors 104 during execution of the program instructions. The program instructions may be loaded into the memory 106 as needed for execution. The memory 106 may be volatile memory (memory that is not configured to retain stored information when not supplied with power) such as random access memory (RAM) and/or non-volatile memory (memory that is configured to retain stored information even when not supplied with power) such as read-only memory (ROM), flash memory, and so forth. In various implementations, the memory 106 may include multiple different types of memory, such as various forms of static random access memory (SRAM), various forms of dynamic random access memory (DRAM), unalterable ROM, and/or writeable variants of ROM such as electrically erasable programmable read-only memory (EEPROM), flash memory, and so forth.

Various program modules, applications (for example, module(s) 110), or the like may be stored in data storage 108 that may comprise computer-executable instructions that when executed by one or more of the processors 104 cause various operations to be performed. The memory 106 may have loaded from the data storage 108 one or more operating systems (O/S) that may provide an interface between other application software (for example dedicated applications, a browser application, a web-based application, a distributed client-server application, etc.) executing on the server 106 and the hardware resources of the server 106. More specifically, the O/S may include a set of computer-executable instructions for managing the hardware resources of the server 106 and for providing common services to other application programs (for example managing memory allocation among various application programs). The O/S may include any operating system now known or which may be developed in the future including, but not limited to, any mobile operating system, desktop or laptop operating system, mainframe operating system, or any other proprietary or open-source operating system.

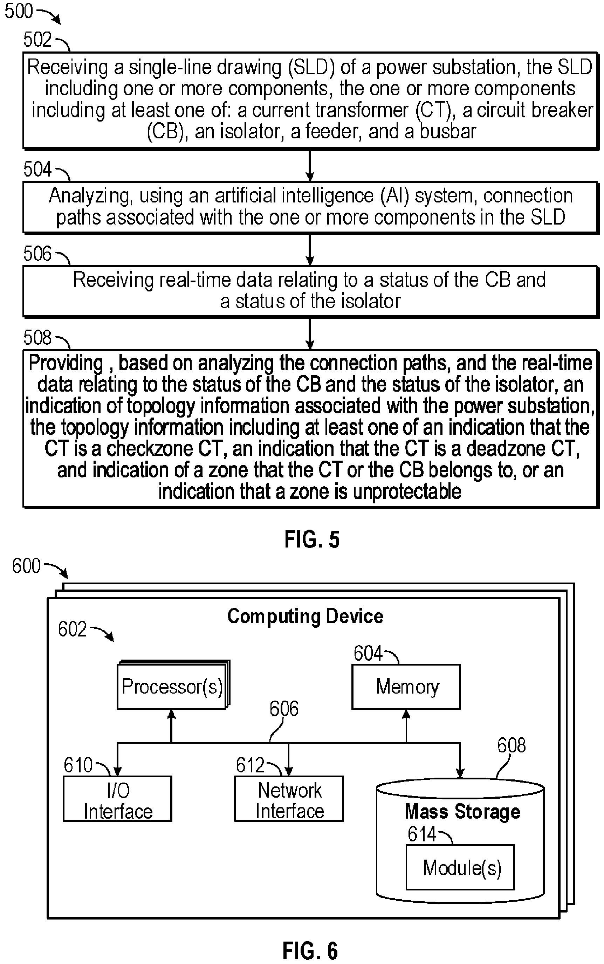

In some embodiments, the central processing unit 102 may also include any of the components described with respect to the computing device 600 of FIG. 6 as well.

In some embodiments, the topology drawing 101 may be a drawing that is representative of a physical configuration of elements in a power substation or other location. As shown in the figure, the topology drawing 101 may be an SLD, which may be a blueprint of an electrical system that may display a distribution path from the incoming power source to each downstream load. The topology drawing 101 may include one or more components, such as one or more busbars (for example, busbar 111 and/or busbar 112), one or more feeders (for example, feeder 113), one or more current transformers (CTs) (for example, CT 114, CT 115, CT 116, and/or CT 117), one or more circuit breakers (CBs) (for example, CB 118, CB 119, and/or CB 120), and/or one or more switches (for example, switch 121, switch 122, switch 123, switch 124, switch 125, switch 126, switch 127, and/or switch 128). A busbar may be a metallic strip or bar that may be used for high current power distribution. A current transformer may be a device used to produce an alternating current in a secondary winding, which is proportional to an AC current being measured in its primary winding. A current transformer may be used when a current or voltage is too high to measure directly. The induced secondary current may instead be suitable for measuring instruments or processing in electronic equipment. A circuit breaker is an electrical switch that may automatically open to protect a circuit from damage caused by excess current. These are just a few examples of types of components that may be included in a topology drawing 104, and any other type and/or number of components may also be included as well.

Fig. 2 depicts an example of a topology drawing conversion to a connection matrix, in accordance with one or more example embodiments of the disclosure. That is, Fig. 2 may present one example of an SLD 202 that may be converted into a connection matrix 210. The example SLD 202 may include one or more components, such as a first busbar 203, a second busbar 204, a first switch (Q1) 205, a second switch (Q2) 206, a circuit breaker (CB1) 207, a current transformer (CT1) 208, and a feeder 209. In this particular example, it may be assumed that CB1 207 and Q1 205 are closed and Q2 206 is open. A major part of the topology configuration data structure may include a connection matrix, which may provide an alternative representation of the connections present in a topology drawing to allow for ease of processing. A column of the connection matrix may represent one side of a component. A side may represent one connection terminal associated with a component. For example, CTs, CBs and isolators may have two sides and zones and feeders may have one. As a more specific example, CB1 may have a first side 211 and a second side 212. The matrix may have three rows per component, for a first side ("S1" or "side 1"), a second side ("S2" or "side two"), and when the first and second sides are connected ("connected"). Each row may indicate which components are connected to the current side and on which side. Each element may be a binary bit and a '1' value may indicate that two components are connected.

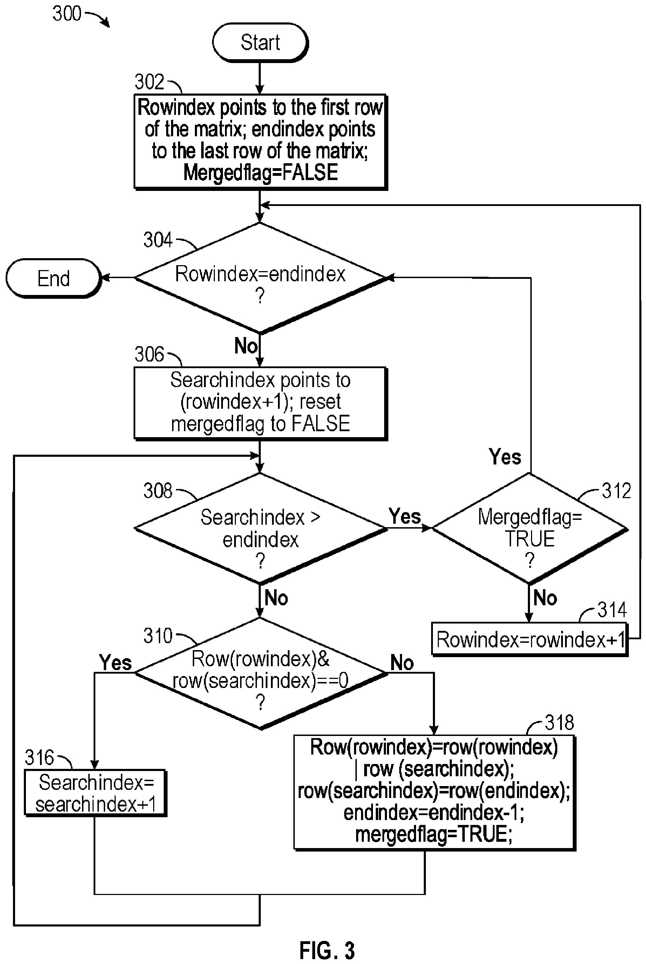

In some embodiments, not every row in the connection matrix 210 needs to be processed and only certain rows of a component are selected depending on whether the component is (or is considered as being) open or closed. For example, only first side and second side rows are selected if an component is open and only connected row may be selected otherwise. As such, the connection matrix 210 may be reduced into a reduced matrix 240. This reduction process may first involve converting the connection matrix 210 into an interim matrix 220. As depicted in the figure, the highlighted rows in the connection matrix 210 may be selected for inclusion in an interim matrix 220. The interim matrix 220 may represent the connections between all the components in the SLD 202 based on their status. The information, however, may be fragmented with each row only showing a component's immediate surrounding. Complete connection paths may be revealed by connecting up rows where a connection exists. In so doing, connected rows may be merged together and the matrix reduced in size. Specifically, matrix reduction may involve searching, reducing, and exhausting the connection matrix 210 until no two rows have any value of '1' in the same column, (for example, until no two rows are connected). Fig. 3 depicts a logical flowchart 300 that may present further details regarding the matrix reduction used to convert the interim matrix 220 into the reduced matrix 240.

Fig. 3 depicts an example flowchart 300, in accordance with one or more example embodiments of the disclosure. As aforementioned, the flowchart 300 may depict operations that may be used to perform matrix reduction (converting the connection matrix into a reduced matrix). Initially, a row index may point to a first row of the interim matrix 220 and an end index may point to the last row of the matrix (for example, the sixth row) . The row index being the first row may indicate a goal of identifying any and every row that is connected with the first row (that is, if a given row and the first row both have "1" in one or more columns). The search may start with the second row. If and when such a row is found, this row may be merged into the first row (for example, by a bit-wise OR operation between the row and the first row) and the new merged row becomes the first row. Additionally, the end index moves up to the second to last row and thus the matrix is reduced by one row. The search goes on until it reaches the end index, the last row of the matrix. At this point a check may be performed to determine if any rows have been merged in the last search. If yes, another search may be required in case the new first row due has a connection with any other rows. This repetition may iterate until no more rows can be merged into the first row.

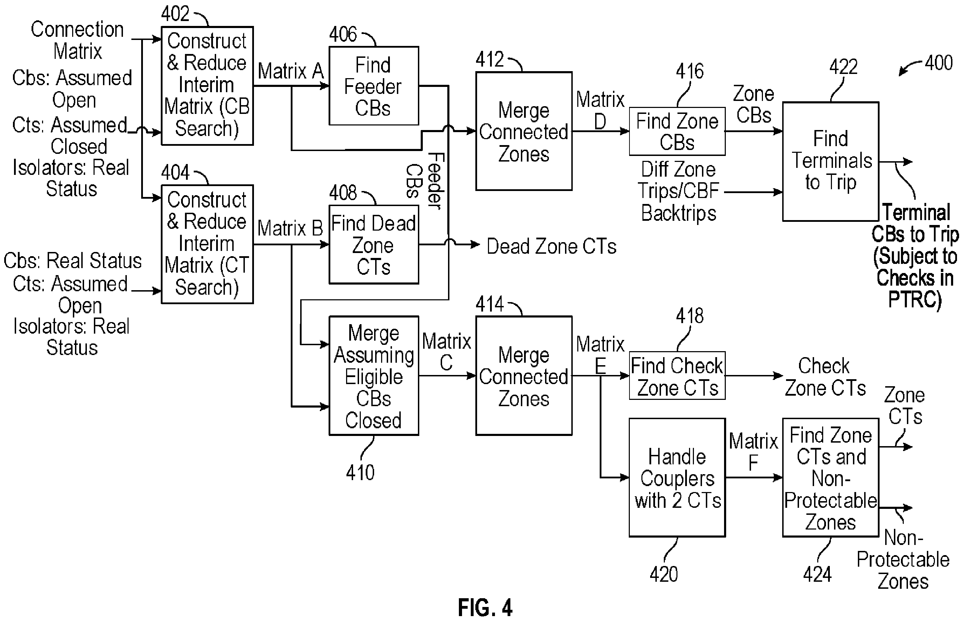

In some embodiments, the flowchart 300 illustrated in Fig. 3 may begin with operation 302. Operation 302 may involve setting a row index value to a first row of the matrix and an end index value to a last row of the matrix. A merged flag value may also be set to a boolean false value. In other words, operation 302 may involve initializing variables so that the entries in the interim matrix may be iterated through. Following operation 302, the flowchart 300 may proceed to condition 304. Condition 304 may involve determining if the row index value is the same as the end index value. This condition may be used to determine if all of the entries in the interim matrix have been analyzed. If the row index value is the same as the end index value, then the condition 304 may determine that all of the interim matrix entries have been analyzed, and the flowchart 300 may end. If, however, it is determined in condition 304 that the row index value is not the same as the end index value, then the flowchart 300 may continue to operation 306. Operation 306 may involve setting a search index value to row index value + 1, and the merged flag value may be reset. That is, a current row being searched may be incremented, such that a second row is pointed to by the search index (and subsequently a third row, fourth row, etc.). Following operation 306, the flowchart may proceed to condition 308. Condition 308 may involve a determination as to whether the search index value is greater than the end index value. If yes, the flowchart 300 may proceed to condition 312. If no, the flowchart 300 may proceed to condition 310. Condition 312 may involve a determination as to whether the merged flag value is a boolean true value. If yes, the flowchart 300 may proceed back to operation 304. If no, the flowchart 300 may proceed to operation 314. Operation 314 may involve incrementing the row index value. Following operation 314, the flowchart 300 may proceed back to condition 304. In some embodiments, condition 310 may involve determining if the value at the row corresponding to the row index and the row corresponding to the search index are both equal to 0 (as mentioned above, the matrix comprises values of "1" or "0"). This may involve a bit-wise AND operation. The matrix may be stored in the memory by fitting each row into a computer "word" with each column represented by a bit, for example, 10000101 or 01100000. If the matrix has more columns than the supported word length, more than one word may be needed to represent each row but the same basic idea applies. With this in mind, this condition may involve determining if the two rows involved, of rowindex and of searchindex, are connected, that is, if the two words (assuming one word is enough to represent each row) both have a "1" in any of the columns (or bits). This may be accomplished by having a bit-wise AND between the two words. A result of 00000000 means they may not be connected because no columns have "1" in both rows. Otherwise, they may be connected. If yes, the flowchart 300 may proceed to operation 316. If no, the flowchart 300 may proceed to operation 318. Operation 316 may involve incrementing the search index value. Operation 318 may involve merging the row associated with the search index with the row associated with the row index. Operation 318 may also involve reducing the matrix by one row (that is, adjusting the end index value by one).. Following operation 316 or operation 318, the flowchart 300 may return to condition 308. In some embodiments, once the reduced matrix is generated, remaining operations may involve extracting meaningful topology information from the reduced matrix. For example, the reduced matrix may provide information that, among other things, CT1 and CB1 are part of a first zone. An example of extracting topology information may be provided in Fig. 4, which is described below.

Fig. 4 depicts a logical flowchart 400 that may present further details regarding operations for extracting meaningful topology information from a reduced matrix (for example, the reduced matrix 240 that may be determined using the example operations described with respect to Fig. 3). The flowchart 400 may include one or more searches through the reduced matrix. For example, a CB search may be performed, and may be exemplified through at least operations 402, 406, 412, 416, and/or 422. A CT search may also be performed, and may be exemplified through at least operations 404, 408, 410, 414, 418, 420, and/or 424. The CB search may primarily be used to establish connections between CBs and busbars. The CT search may primarily be used to establish connections between CTs and busbars.

In some embodiments, the CB search of the flowchart 400 may begin with operation 402. Operation 402 may include constructing and reducing a first interim matrix (for example, generating an interim matrix 220 from a connection matrix 210 as shown in Fig. 2). Constructing the first interim matrix may involve receiving a connection matrix associated with a received SLD for a particular substation as an input. Constructing the first interim matrix may also involve establishing one or more parameters. These parameters may include considering all CBs as being open, all CTs closed, and using real status information relating to all isolators. The first interim matrix may then be reduced into a first reduced matrix. This first reduced matrix may be referred to herein as "matrix A." Following operation 402 the flowchart 400 may proceed to operation 406. Operation 406 may involve finding any feeder CBs in matrix A. Particularly, if a row in matrix A includes a CB and a feeder, then the CB may be marked as a feeder CB in the matrix. In some embodiments, operation 406 may be followed by operation 412. Operation 412 may involve merging any connected zones.. Merging any connection zones may be performed as follows. A search may be performed in matrix A, and if a row in matrix A has more than one zone, then it may be determined that the zones are connected. If two zones are connected, any component that belongs to the second zone may be added to the first zone. The second zone may then be deleted. This process may be repeated until no two zones are connected. The resulting matrix may be referred to herein as "matrix D." Following operation 412, the flowchart 400 may proceed to operation 416. Operation 416 may involve finding and zone CBs. Zone CBs may be identified by determining, if a row in matrix D has a zone and a CB. If so, then the CB belongs to the zone. Following operation 416, the flowchart may proceed to operation 422. Operation 422 may involve finding terminals to trip. That is, operation 422 may determines which terminal CBs to trip based on which zone to trip and which CBs belongs to the zone. The zone CBs may be determined from operation 416.

In some embodiments, the CT search of the flowchart 400 may begin with operation 404. Operation 404 may involve constructing and reducing a second interim matrix. Similar to the first interim matrix, constructing the second interim matrix may involve receiving a connection matrix associated with a received SLD for a particular substation as an input. In some cases, the connection matrix may be the same connection matrix used in operation 402. Constructing the second interim matrix may also involve establishing one or more parameters. The parameters may include considering all CTs as being open and using real status information relating to all CBs and isolators. The second reduced matrix may be referred to herein as "matrix B." Following operation 404, the flowchart 400 may proceed to operation 408 and operation 410. Operation 408 may involve finding dead zone CTs in matrix B. Particularly, if a row in matrix B has no zone and no feeder on one side of a CT and this is the only CT in the row and the other side of the CT is connected to a feeder, then the CT may be marked as a dead zone. Any dead zone CTs may then be provided as outputs of the flowchart 400. Operation 410 may involve merging rows in matrix B. Rows may be merged in matrix B if either of these two conditions are met: (1) if the CB is a feeder CB and its associated CT is connected to a feeder in matrix B or (2) if the CB is a coupler CB with 2 CTs. This merging may be performed assuming that an open CB is closed. The matrix resulting from operation 410 may be referred to as "matrix C." Following operation 410, the flowchart may proceed to operation 414. Operation 414 may involve merging any connected zones. Merging any connection zones may be performed as follows. A search may be performed in matrix C, and if a row in matrix C has more than one zone, then it may be determined that the zones are connected. If two zones are connected, any component that belongs to the second zone may be added to the first zone. The second zone may then be deleted. This process may be repeated until no two zones are connected. The resulting matrix may be referred to herein as "matrix E." Following operation 414, the flowchart 400 may proceed to operations 418 and 420. Operation 418 may involve finding zone CTs. Finding zone CTs may be performed as follows. In the matrix E, if a row has one side and only one side of a CT and a feeder, then the CT may be added to the check zone. In the matrix E, if, in the reduced matrix, a side of CT is not connected to any zone or feeder or CT and the other side is not connected to a feeder then the other side of the CT is also taken out of any connected zones taking the whole CT out of any zone. In the matrix E, if a row has a zone and one side of a CT add the CT to the zone. If a row has a zone and both sides of a CT take the CT out of the zone. Operation 420 may involve handling couplers with two CTs. In the matrix E, for a coupler with two CTs, the coupler-components-only row may be merged with any applicable rows, by assuming one of the coupling CTs is closed but the second coupling CT open, but keeping the coupler-components-only row. Then coupler-components-only row may be merged with any applicable rows, by assuming the second coupling CTs is closed but the first coupling CT open. The coupler-components-only row may then be deleted. The resulting matrix may be referred to as matrix F. Following operation 420, the flowchart 400 may proceed to operation 424, which may involve identifying zone CTs and non-protectable zones. A non-protectable zone may be where a feeder is connected to a busbar without a CT, meaning that the zone has a feeder on which the current cannot be measured therefore the zone cannot be protected by the differential protection. In the matrix E', if a row has both a zone and a feeder then raise a flag to indicate this zone can't be protected as it has a feeder without CT. In the matrix E', if a row has a zone and one side of a CT add the CT to the zone. If a row has a zone and both sides of a CT take the CT out of the zone. In the matrix E', if a row has a zone and two or more CTs from the same coupler take the CTs out of the zone. In the matrix E', for a bus coupler with two CTs, if one of the CTs is not connected to any zone or feeder remove the other CT from any zone too.

Fig. 5 depicts an example method 500. Block 502 of the method 500 may include receiving a single-line drawing (SLD) of a power substation, the SLD including one or more components, the one or more components including at least one of: a current transformer (CT), a circuit breaker (CB), an isolator, a feeder, and a busbar. Block 504 of the method 500 may include analyzing, using an artificial intelligence (AI) system, connection paths associated with the one or more components in the SLD. Block 506 of the method 500 may include receiving real-time data relating to a status of the CB and a status of the isolator. Block 508 of the method 500 may include providing, based on analyzing the connection paths, and the real-time data relating to the status of the CB and the status of the isolator, an indication of topology information associated with the power substation, the topology information including at least one of: an indication that the CT is a checkzone CT, an indication that the CT is a deadzone CT, an indication of a zone associated with the CT or the CB, or an indication that a zone is unprotectable.

In some embodiments, the method 500 may also include identifying a connection issue associated with a first component of the one or more components in the SLD. The method 500 may also include presenting an indication of the connection issue on a user interface, wherein identifying the connection issue further comprises identifying a first component of the one or more components that includes only one connection to a second component or includes no connections to other components.

In some embodiments, analyzing the connection paths between the one or more components in the SLD further comprises identifying a connection between the CB and the busbar, wherein identifying the connection between the CB and the busbar comprises converting the SLD into a connection matrix, the connection matrix including a first value to indicate a connection between a first component and a second component of the one or more components, and a second value to indicate an absence of a connection between the first component and a third component of the one or more components, wherein identifying the connection between the CB and the busbar is based on establishing the CB as open, establishing the CT as closed, and determining a real-time status of the isolator.

In some embodiments, analyzing the connection paths associated with the one or more components in the SLD further comprises reducing the connection matrix into a reduced matrix.

In some embodiments, the method 500 may also include merging any connected zones in the reduced matrix.

In some embodiments, analyzing the connection paths between the one or more components in the SLD further comprises identifying connections between the CT and the busbar, wherein identifying connections between the CT and the busbar comprises converting the SLD into a connection matrix, the connection matrix including a first value to indicate a connection between a first component and a second component of the one or more components, and a second value to indicate an absence of a connection between the first component and a third component of the one or more components, wherein identifying the connection between the CB and the busbar further comprises establishing the CT as open, and determining a real-time status of the isolator and the CB.

In some embodiments, analyzing connection paths associated with the one or more components in the SLD further comprises generating a single connection information file for processing by the AI system, and wherein analyzing the connection paths is performed without separating the one or more components into smaller parts.

The operations described and depicted in the illustrative process flow of Figs. 3-5 may be carried out or performed in any suitable order as desired in various example embodiments of the disclosure. Additionally, in certain example embodiments, at least a portion of the operations may be carried out in parallel. Furthermore, in certain example embodiments, less, more, or different operations than those depicted in Figs. 3-5 may be performed.

Fig. 6 illustrates an example computing system and device 600, in accordance with one or more embodiments of this disclosure. The computing device 600 may be representative of any number of elements described herein, such the protection relay 102, or any other element described herein. The computing device 600 may include one or more processors 602 that execute instructions that are stored in one or more memory devices (referred to as memory 604). The instructions can be, for instance, instructions for implementing functionality described as being carried out by one or more modules and systems disclosed above or instructions for implementing one or more of the methods disclosed above. The one or more processors 602 can be embodied in, for example, a CPU, multiple CPUs, a GPU, multiple GPUs, a TPU, multiple TPUs, a multi-core processor, a combination thereof, and the like. In some embodiments, the one or more processors 602 can be arranged in a single processing device. In other embodiments, the one or more processors 602 can be distributed across two or more processing devices (e.g., multiple CPUs; multiple GPUs; a combination thereof; or the like). A processor can be implemented as a combination of processing circuitry or computing processing units (such as CPUs, GPUs, or a combination of both). Therefore, for the sake of illustration, a processor can refer to a single-core processor; a single processor with software multithread execution capability; a multi-core processor; a multi-core processor with software multithread execution capability; a multi-core processor with hardware multithread technology; a parallel processing (or computing) platform; and parallel computing platforms with distributed shared memory. Additionally, or as another example, a processor can refer to an integrated circuit (IC), an ASIC, a digital signal processor (DSP), an FPGA, a PLC, a complex programmable logic device (CPLD), a discrete gate or transistor logic, discrete hardware components, or any combination thereof designed or otherwise configured (e.g., manufactured) to perform the functions described herein.

The one or more processors 602 can access the memory 604 by means of a communication architecture 606 (e.g., a system bus). The communication architecture 606 may be suitable for the particular arrangement (localized or distributed) and types of the one or more processors 602. In some embodiments, the communication architecture 606 can include one or many bus architectures, such as a memory bus or a memory controller; a peripheral bus; an accelerated graphics port; a processor or local bus; a combination thereof, or the like. As an illustration, such architectures can include an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, a Peripheral Component Interconnect (PCI) bus, a PCI-Express bus, a Personal Computer Memory Card International Association (PCMCIA) bus, a Universal Serial Bus (USB), and/or the like.

Memory components or memory devices disclosed herein can be embodied in either volatile memory or non-volatile memory or can include both volatile and non-volatile memory. In addition, the memory components or memory devices can be removable or non-removable, and/or internal or external to a computing device or component. Examples of various types of non-transitory storage media can include hard-disc drives, zip drives, CD-ROMs, digital versatile disks (DVDs) or other optical storage, magnetic cassettes, magnetic tape, magnetic disk storage or other magnetic storage devices, flash memory cards or other types of memory cards, cartridges, or any other non-transitory media suitable to retain the desired information and which can be accessed by a computing device.

As an illustration, non-volatile memory can include read-only memory (ROM), programmable ROM (PROM), electrically programmable ROM (EPROM), electrically erasable programmable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The disclosed memory devices or memories of the operational or computational environments described herein are intended to include one or more of these and/or any other suitable types of memory. In addition to storing executable instructions, the memory 604 also can retain data.

Each computing device 600 also can include mass storage 608 that is accessible by the one or more processors 602 by means of the communication architecture 606. The mass storage 608 can include machine-accessible instructions (e.g., computer-readable instructions and/or computer-executable instructions). In some embodiments, the machine-accessible instructions may be encoded in the mass storage 608 and can be arranged in components that can be built (e.g., linked and compiled) and retained in computer-executable form in the mass storage 608 or in one or more other machine-accessible non-transitory storage media included in the computing device 600. Such components can embody, or can constitute, one or many of the various modules disclosed herein. Such modules are illustrated as modules 614.

Execution of the modules 614, individually or in combination, by the one more processors 602, can cause the computing device 600 to perform any of the operations described herein (for example, the operations described with respect to Fig. 3-5, as well as any other operations).

Each computing device 600 also can include one or more input/output interface devices 610 (referred to as I/O interface 610) that can permit or otherwise facilitate external devices to communicate with the computing device 600. For instance, the I/O interface 610 may be used to receive and send data and/or instructions from and to an external computing device.

The computing device 600 also includes one or more network interface devices 612 (referred to as network interface(s) 612) that can permit or otherwise facilitate functionally coupling the computing device 600 with one or more external devices. Functionally coupling the computing device 600 to an external device can include establishing a wireline connection or a wireless connection between the computing device 600 and the external device. The network interface(s) 612 can include one or many antennas and a communication processing device that can permit wireless communication between the computing device 600 and another external device. For example, between a vehicle and a smart infrastructure system, between two smart infrastructure systems, etc. Such a communication processing device can process data according to defined protocols of one or several radio technologies. The radio technologies can include, for example, 3G, Long Term Evolution (LTE), LTE-Advanced, 5G, IEEE 802.11, IEEE 802.16, Bluetooth, ZigBee, near-field communication (NFC), and the like. The communication processing device can also process data according to other protocols as well, such as vehicle-to-infrastructure (V2I) communications, vehicle-to-vehicle (V2V) communications, and the like. The network interface(s) 612 may also be used to facilitate peer-to-peer ad-hoc network connections as described herein.

As used in this application, the terms "environment," "system," "unit," "module," "architecture," "interface," "component," and the like refer to a computer-related entity or an entity related to an operational apparatus with one or more defined functionalities. The terms "environment," "system," "module," "component," "architecture," "interface," and "unit," can be utilized interchangeably and can be generically referred to functional elements. Such entities may be either hardware, a combination of hardware and software, software, or software in execution. As an example, a module can be embodied in a process running on a processor, a processor, an component, an executable portion of software, a thread of execution, a program, and/or a computing device. As another example, both a software application executing on a computing device and the computing device can embody a module. As yet another example, one or more modules may reside within a process and/or thread of execution. A module may be localized on one computing device or distributed between two or more computing devices. As is disclosed herein, a module can execute from various computer-readable non-transitory storage media having various data structures stored thereon. Modules can communicate via local and/or remote processes in accordance, for example, with a signal (either analogic or digital) having one or more data packets (e.g., data from one component interacting with another component in a local system, distributed system, and/or across a network such as a wide area network with other systems via the signal).

As yet another example, a module can be embodied in or can include an apparatus with a defined functionality provided by mechanical parts operated by electric or electronic circuitry that is controlled by a software application or firmware application executed by a processor. Such a processor can be internal or external to the apparatus and can execute at least part of the software or firmware application. Still, in another example, a module can be embodied in or can include an apparatus that provides defined functionality through electronic components without mechanical parts. The electronic components can include a processor to execute software or firmware that permits or otherwise facilitates, at least in part, the functionality of the electronic components.

In some embodiments, modules can communicate via local and/or remote processes in accordance, for example, with a signal (either analog or digital) having one or more data packets (e.g., data from one component interacting with another component in a local system, distributed system, and/or across a network such as a wide area network with other systems via the signal). In addition, or in other embodiments, modules can communicate or otherwise be coupled via thermal, mechanical, electrical, and/or electromechanical coupling mechanisms (such as conduits, connectors, combinations thereof, or the like). An interface can include input/output (I/O) components as well as associated processors, applications, and/or other programming components.

Further, in the present specification and annexed drawings, terms such as "store," "storage," "data store," "data storage," "memory," "repository," and substantially any other information storage component relevant to the operation and functionality of a component of the disclosure, refer to memory components, entities embodied in one or several memory devices, or components forming a memory device. It is noted that the memory components or memory devices described herein embody or include non-transitory computer storage media that can be readable or otherwise accessible by a computing device. Such media can be implemented in any methods or technology for storage of information, such as machine-accessible instructions (e.g., computer-readable instructions), information structures, program modules, or other information components.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language generally is not intended to imply that features, elements, and/or operations are in any way required for one or more implementations or that one or more implementations necessarily include logic for deciding, with or without user input or prompting, whether these features, elements, and/or operations are included or are to be performed in any particular implementation.

What has been described herein in the present specification and annexed drawings includes examples of systems, devices, techniques, and computer program products that, individually and in combination, permit centralized AI-based topology process for differential protection of a power substation. It is, of course, not possible to describe every conceivable combination of components and/or methods for purposes of describing the various elements of the disclosure, but it can be recognized that many further combinations and permutations of the disclosed elements are possible. Accordingly, it may be apparent that various modifications can be made to the disclosure without departing from the scope thereof. In addition, or as an alternative, other embodiments of the disclosure may be apparent from consideration of the specification and annexed drawings, and practice of the disclosure as presented herein. It is intended that the examples put forth in the specification and annexed drawings be considered, in all respects, as illustrative and not limiting. Although specific terms are employed herein, they are used in a generic and descriptive sense only and not for purposes of limitation.

## Claims

1. A method comprising:
receiving a single-line drawing (SLD) (202) of a power substation, the SLD (202) including one or more components, the one or more components including at least one of: a current transformer (CT) (114, 115, 116, and/or 117), a circuit breaker (CB) (118, 119, and/or 120), an isolator, a feeder (113, 209), and a busbar (111, 112, 203, 204);
analyzing, using an artificial intelligence (AI) system, connection paths associated with the one or more components in the SLD (202);
receiving real-time data relating to a status of the CB (118, 119, and/or 120) and a status of the isolator; and
providing, based on analyzing the connection paths, and the real-time data relating to the status of the CB (118, 119, and/or 120) and the status of the isolator, an indication of topology information associated with the power substation, the topology information including at least one of: an indication that the CT (114, 115, 116, and/or 117) is a checkzone CT (418), an indication that the CT is a deadzone CT, an indication of a zone associated with the CT (114, 115, 116 and/or 117) or the CB (118, 119, and/or 120), or an indication that a zone is unprotectable.

2. The method of claim 1, further comprising:
identifying a connection issue associated with a first component of the one or more components in the SLD (202); and
presenting an indication of the connection issue on a user interface, wherein identifying the connection issue further comprises identifying a first component of the one or more components that includes only one connection to a second component or includes no connections to other components.

3. The method of claim 1, wherein analyzing the connection paths between the one or more components in the SLD (202) further comprises identifying a connection between the CB (118, 119, and/or 120) and the busbar (111, 112, 203, 204), wherein identifying the connection between the CB (118, 119, and/or 120) and the busbar (111, 112, 203, 204) comprises converting the SLD (202) into a connection matrix, the connection matrix (210) including a first value to indicate a connection between a first component and a second component of the one or more components, and a second value to indicate an absence of a connection between the first component and a third component of the one or more components, wherein identifying the connection between the CB (118, 119 and/or 120) and the busbar (111, 112, 203, 204), is based on establishing the CB (118, 119, and/or 120) as open, establishing the CT (114, 115, 116, and/or 117) as closed, and determining a real-time status of the isolator.

4. The method of claim 3, wherein analyzing the connection paths associated with the one or more components in the SLD (202) further comprises reducing the connection matrix into a reduced matrix (240).

5. The method of claim 4, further comprising merging any connected zones in the reduced matrix (240).

6. The method of claim 1, wherein analyzing the connection paths between the one or more components in the SLD (202) further comprises identifying connections between the CT (114, 115, 116, and/or 117) and the busbar (111, 112, 203, 204), wherein identifying connections between the CT (114, 115, 116 and/or 117) and the busbar (111, 112, 203, 204) comprises converting the SLD (202, 210) into a connection matrix, the connection matrix including a first value to indicate a connection between a first component and a second component of the one or more components, and a second value to indicate an absence of a connection between the first component and a third component of the one or more components, wherein identifying the connection between the CB (118, 119, and/or 120) and the busbar (111, 112, 203, 204) further comprises establishing the CT (114, 115, 116, and/or 117) as open, and determining a real-time status of the isolator and the CB (118, 119, and/or 120).

7. The method of claim 1, wherein analyzing connection paths associated with the one or more components in the SLD (202) further comprises generating a single connection information file for processing by the AI system, and wherein analyzing the connection paths is performed without separating the one or more components into smaller parts.

8. A system comprising:
a computer processor (104, 602) operable to execute a set of computer-readable instructions; and a memory (106, 604) operable to store the set of computer-readable instructions operable to:
receive a single-line drawing (SLD) (202) of a power substation, the SLD (202) including one or more components, the one or more components including at least one of: a current transformer (CT) (114, 115, 116, and/or 117, 208), a circuit breaker (CB) (118, 119, and/or 120), an isolator, a feeder (209), and a busbar (111, 112, 203, 204);
analyze, using an artificial intelligence (AI) system, connection paths associated with the one or more components in the SLD (202);
receive real-time data relating to a status of the CB (118, 119, and/or 120, 402) and a status of the isolator; and
provide, based on analyzing the connection paths, and the real-time data relating to the status of the CB (118, 119, and/or 120) and the status of the isolator, an indication of topology (200) information associated with the power substation, the topology information including at least one of: an indication that the CT is a checkzone CT, an indication that the CT is a deadzone CT, an indication of a zone associated with the CT or the CB (118, 119, and/or 120), or an indication that a zone is unprotectable.

9. The system of claim 8, wherein the computer-readable instructions are further operable to:
identify a connection issue associated with a first component of the one or more components in the SLD (202); and
present an indication of the connection issue on a user interface, wherein identifying the connection issue further comprises identifying a first component of the one or more components that includes only one connection to a second component or includes no connections to other components.

10. The system of claim 8, wherein analyzing the connection paths between the one or more components in the SLD (202) further comprises identifying a connection between the CB (118, 119 and/or 120) and the busbar (111, 112, 203, 204), wherein identifying the connection between the CB (118, 119 and/or120) and the busbar (111, 112, 203, 204) comprises converting the SLD (202) into a connection matrix, (210) the connection matrix (210) including a first value to indicate a connection between a first component and a second component of the one or more components, and a second value to indicate an absence of a connection between the first component and a third component of the one or more components, wherein identifying the connection between the CB and the busbar further comprises establishing the CB as open, establishing the CT as closed, and determining a real-time status of the isolator.

11. The system of claim 10, wherein analyzing the connection paths associated with the one or more components in the SLD (202) further comprises reducing the connection matrix (210) into a reduced matrix (240).

12. The system of claim 11, wherein the computer-readable instructions are further operable to merge any connected zones in the reduced matrix.

13. The system of claim 8, wherein analyzing the connection paths between the one or more components in the SLD (202) further comprises identifying connections between the CT and the busbar (111, 112, 203, 204), wherein identifying connections between the CT and the busbar (111, 112, 203, 204) comprises converting the SLD (202) into a connection matrix (210), the connection matrix including a first value to indicate a connection between a first component and a second component of the one or more components, and a second value to indicate an absence of a connection between the first component and a third component of the one or more components, wherein identifying the connection between the CB and the busbar (111, 112, 203, 204) is based on establishing the CT as open, and determining a real-time status of the isolator and the CB.

14. The system of claim 8, wherein analyzing connection paths associated with the one or more components in the SLD (202) further comprises generating a single connection information file for processing by the AI system, and wherein analyzing the connection paths is performed without separating the one or more components into smaller parts.

15. A non-transitory computer-readable medium storing computer-executable instructions, that when executed by at least one processor (104, 602), cause the at least one processor (104, 602) to perform operations of:
receiving a single-line drawing (SLD) (202) of a power substation, the SLD (202) including one or more components, the one or more components including at least one of: a current transformer (CT), a circuit breaker (CB), an isolator, a feeder, (112) and a busbar (111, 112, 203, 204);
analyzing, using an artificial intelligence (AI) system, connection paths associated with the one or more components in the SLD (202);
receiving real-time data relating to a status of the CB and a status of the isolator; and
providing, based on analyzing the connection paths, and the real-time data relating to the status of the CB and the status of the isolator, an indication of topology information associated with the power substation, the topology information including at least one of: an indication that the CT is a checkzone CT, an indication that the CT is a deadzone CT, an indication of a zone associated with the CT or the CB, or an indication that a zone is unprotectable.
